# EUROPÄISCHE PATENTANMELDUNG

(11) **EP 3 556 821 A1**
(43) Veröffentlichungstag der Anmeldung: **23.10.2019**
(21) Anmeldenummer: 18168578.5
(22) Anmeldetag: 20.04.2018
(51) Int. Cl.: C09J 7/40, C09J 7/29, B32B 7/12, C09J 7/38

(54) **SELBSTKLEBEFOLIE MIT KLEBEFREUNDLICHER OBERFLÄCHE UND ABDECKSCHICHT**

(71) Anmelder: Uzin Utz Schweiz AG, 6374 Buochs (CH)
(72) Erfinder: WIGGER, Thomas, 6232 Geuensee (CH); SEVENIG, Florian, 6374 Buochs (CH)
(74) Vertreter: Isarpatent

(57) **Zusammenfassung**

Die vorliegende Erfindung betrifft die Konstruktion einer einseitig selbstklebenden Klebefolie mit klebefreundlicher Oberfläche, ein Verfahren zur Herstellung einer solchen einseitig selbstklebenden Klebefolie, ein Verfahren zum Auftragen der einseitig selbstklebenden Klebefolie, insbesondere zum vollflächigem Auftragen auf einem Untergrund, z.B. einem Boden, einer Wand oder einer Decke, sowie die Verwendung der selbstklebenden Klebefolie zum, insbesondere vollflächigen, Auftragen auf einen Untergrund und zum Auftragen eines Klebstoffes und/oder einer Spachtelmasse auf der klebefreundlichen Oberfläche der Selbstklebefolie.

## Beschreibung

Die vorliegende Erfindung betrifft die Konstruktion einer einseitig selbstklebenden Klebefolie mit klebefreundlicher Oberfläche, ein Verfahren zur Herstellung einer solchen einseitig selbstklebenden Klebefolie, ein Verfahren zum Auftragen der einseitig selbstklebenden Klebefolie, insbesondere zum vollflächigem Auftragen auf einem Untergrund, z.B. einem Boden, einer Wand oder einer Decke, sowie die Verwendung der selbstklebenden Klebefolie zum, insbesondere vollflächigen, Auftragen auf einen Untergrund und zum Auftragen eines Klebstoffes und/oder einer Spachtelmasse auf der klebefreundlichen Oberfläche der Selbstklebefolie.

### Stand der Technik

Einseitig selbstklebende Trockenklebstoffe bzw. Klebebänder, welche normalerweise für Baustellenanwendungen auf Rollen angeboten werden, haben zur Vermeidung vom Verblocken eine haftungsmindernde Schicht auf der Rückseite des Klebebandes bzw. Trägerrückseite oder eine entfernbare Abdeckschicht auf der Haftkleberschicht aufgebracht. Somit können die Klebebänder gerollt und wieder problemlos, ohne zu verblocken, abgerollt werden.

Die Konstruktion mit der haftungsmindernden Schicht auf der Trägerrückseite ist für eine weiter Klebung haftungsunfreundlich, weshalb es auf einer Baustellensituation kaum möglich ist, auf diese Klebebänder eine weitere Schicht mit konventionellen Klebstoffen oder Spachtelmassen mit ausreichenden Klebkräften aufzubringen, z.B. wenn eine Dampfbremse auf ein Bauteil, z.B. einen Boden, eine Decke oder eine Wand, vollflächig geklebt wird und darauf eine Isolation, ein Bodenbelag oder eine Schutzschicht geklebt oder darauf beispielsweise eine Spachtelmasse aufgebracht werden soll.

Beim Vorliegen einer klebefreundlichen Oberfläche und Fehlen einer haftungsmindernden Schicht, neigen die Klebebandrollen zum Verblocken. Dies trifft insbesondere für Selbstklebefolien mit höheren Klebekräften nach DIN EN 1939:2003 über ca. 15 N/25 mm zu.

Daher werden heute einseitig selbstklebende Klebebänder, auf welche weiter geklebt werden soll, eingesetzt, welche auf der Trägerrückseite klebefreundlich ausgerüstet sind und, zur Vermeidung von Verblockung, eine ablösbare Abdeckschicht auf der Haftkleberschicht aufweisen.

Diese Klebebänder sind nicht komfortabel in der Anwendung, da vor dem Aufkleben des Klebebandes die Abdeckschicht entfernt werden muss, was einerseits die Handhabung kompliziert, anspruchsvoll und umständlich macht und andererseits durch das Entfernen der Abdeckschicht das freie Klebeband viel beweglicher wird und sehr schnell Falten entstehen können. Insbesondere, wenn eine Fläche, z.B. ein Boden, eine Wand oder eine Decke, vollflächig beklebt werden soll und daher Klebefolien mit höheren Breiten, z.B. über 300 mm Breite, eingesetzt werden, ist eine Verarbeitung in der Praxis nicht mehr manuell möglich, da man mit einer Hand die Selbstklebefolie halten und mit der anderen die Schutzfolie abziehen muss und dadurch gezwungenermaßen Falten entstehen. Dies ist gerade beim vollflächigen Kleben einer Dampfbremse auf einen Untergrund von grossem Nachteil, da dadurch undichte Stellen entstehen können. Zudem muss das Klebeband auf der anschließend zu beklebenden Seite des Trägers angerieben werden. Dadurch kann die Rückseite der Klebefolie, also die klebefreundliche Oberfläche der Klebefolie verletzt, verschmutzt, beschädigt oder anderweitig beeinträchtigt und die Klebefreundlichkeit und/oder physische Integrität dadurch beeinträchtigt, vermindert oder gar zerstört werden. Zudem sind solche Rollen nur wenig stabil und neigen dazu, sich selber abzurollen oder auseinander zu fallen. Dies macht die Handhabung zusätzlich aufwändig und kompliziert.

Eine einseitig selbstklebende Klebefolie mit klebefreundlicher Oberfläche aber ohne entfernbare Abdeckschicht kann auch bei weniger hohen Klebkräften der Haftkleberschicht verblocken oder zumindest hohe bis sehr hohe Abrollkräfte aufweisen. Bei breiteren Rollen über 300 mm Breite, wie sie für das vollflächige Aufkleben auf einen Untergrund benötigt werden, ist auch bei nur erhöhten Abrollkräften die Verarbeitung in der Praxis nicht mehr möglich, da einerseits die Abrollkräfte proportional zur Breite steigen und andererseits die punktuellen Belastungen beim manuellen Abrollen der Selbstklebefolie auf die Klebefolie bzw. dessen Träger entsprechend steigen. Eine Beschädigung der Selbstklebefolie ist kaum zu vermeiden. Zudem kann es auch teilweise beim Abrollen einer solchen Klebebandrolle vorkommen, dass Haftkleber der Haftkleberschicht auf der klebefreundlichen Oberfläche verbleibt, was für die weitere Verarbeitung störend wirken kann.

Doppelseitig selbstklebende Klebebänder weisen zwei entgegengesetzt orientierte selbstklebende Haftkleberschichten auf, wobei die eine Schicht offen ist und auf dem zu beklebenden Untergrund aufgebracht wird und auf der zweiten Haftkleberschicht eine entfernbare Abdeckschicht aufgebracht ist. Diese ist in der Regel so konstruiert, dass sie auf der zweiten Haftkleberschicht ein wenig stärker haftet als auf der ersten Haftkleberschicht und so eine eindeutige Orientierung der Abdeckschicht auf der Rolle erhalten bleibt. Mittels der zweiten Haftkleberschicht kann weiter geklebt werden. Dies ist jedoch nicht in allen Anwendungen gewünscht oder sinnvoll. Entsprechende Klebebänder sind beispielsweise aus DE 298 24 685, EP 0567 110 oder EP 1 311 643 bekannt. Die Haftkleberschichten sind in der Regel nicht geeignet, um einem konventionellen Klebstoff oder einer Spachtelmasse als klebefreundliche Oberfläche zu dienen.

Ebenso ist es in der Regel auf Baustellen nicht möglich, eine geeignete Oberflächenvorbehandlung, z.B. eine Koronabehandlung oder Plasmabehandlung, für vollflächig verlegte, einseitig selbstklebende Klebebänder auszuführen, welche die zuvor haftungsmindernde Schicht in eine haftungsfreundliche Oberfläche umwandelt. Der apparative Aufwand ist in der Regel in der Baustellensituation nicht praktikabel.

Es besteht somit ein Bedarf an einer einseitig selbstklebenden Klebefolie für die vollflächige Klebung auf einen Untergrund, z.B. einem Boden, einer Wand oder einer Decke, beispielsweise einem einseitig selbstklebenden Klebeband bzw. Klebeplatten, z.B. in einer Breite von mindestens 300 mm, welche eine Haftkleberschicht und auf der Trägerrückseite bzw. Klebebandrückseite, also der gegenüberliegenden Trägeroberfläche, eine klebefreundliche Oberfläche aufweist und eine praxistaugliche, komfortable Anwendung ohne maschinelle Hilfsmittel ermöglicht. Dies beinhaltet insbesondere, dass die Haftkleberschicht beim Abrollen der Selbstklebefolie offen liegt und die einseitig selbstklebende Klebefolie auf der zu beklebenden Oberfläche aufgebracht und angerieben werden kann und eine eventuell zu entfernende Abdeckschicht erst in einem Folgeschritt, d.h. vor dem weiteren Bekleben, entfernt werden muss. Diese Oberfläche soll bevorzugt für einen konventionellen Bauklebstoff, z.B. einem Bodenbelagskleber, Parkettkleber, Fliesenkleber etc., bzw. einer konventionellen Spachtelmasse, z.B. selbstverlaufenden Spachtelmasse, eine klebefreundliche Oberfläche bieten.

### Kurze Zusammenfassung der Erfindung

Es wurden folgende Überlegungen angestellt: Für eine gute, komfortable Applizierbarkeit einer erfindungsgemäßen Klebefolie, z.B. eines Klebebandes liegt die Haftkleberschicht der Klebefolie, z.B. des Klebebandes, bevorzugt offen, d.h. ist nicht durch einen Liner bzw. eine Abdeckschicht abgedeckt. Zudem sollte für eine weitere Verarbeitbarkeit eine klebefreundliche Oberfläche vorliegen, die der Umgebung zugewandt ist. Da solche Klebefolien jedoch üblicherweise als Rollen oder gestapelte Platten angeboten werden, ist es somit erforderlich, dass die Haftkleberschicht bevorzugt im Wesentlichen nicht auf der kleberfreundlichen Oberfläche anhaftet. Dadurch kann es vermieden werden, dass die Rollen bzw. Platten verblocken oder nur mit hohen Kräften trennbar werden oder allenfalls Haftkleberrückstände der Haftkleberschicht auf der klebefreundlichen Oberfläche verbleiben. Auch kann es vermieden werden, dass eine eventuelle entfernbare Abdeckschicht auf der Haftkleberschicht der Klebefolie verbleibt, wenn diese beim Aufrollen oder Stapeln in Kontakt treten, bzw. diese beim Entstapeln oder Abrollen getrennt werden.

Die Erfinder haben herausgefunden, wie eine einseitig selbstklebende Klebefolie konstruiert werden muss, um einerseits eine komfortable, praxistaugliche, z.B. insbesondere faltenfreie, vollflächige Klebung der einseitig selbstklebenden Klebefolie auf einen Untergrund zu ermöglichen und andererseits eine klebefreundliche Oberfläche für ein weiteres Bekleben mit einem konventionellen Klebstoff oder einer konventionellen Spachtelmasse bereit zu stellen.

Die Erfinder haben herausgefunden, dass es hierbei eine maximale Haftung der Haftkleberschicht auf der klebefreundlichen Oberfläche oder einer entfernbaren Abdeckschicht haben kann, bei der sowohl die Trägerfolie als auch die Haftkleberschicht beim Abtrennen im Wesentlichen nicht beschädigt werden.

In einem ersten Aspekt betrifft die vorliegende Erfindung eine einseitig selbstklebende Klebefolie, umfassend,
- mindestens eine Trägerfolie, wobei die Trägerfolie auf einer Seite eine klebefreundliche Oberfläche aufweist; und
- eine Haftkleberschicht, welche sich auf einer der Umgebung zugewandten Seite der Trägerfolie auf der der klebefreundlichen Oberfläche gegenüberliegenden Seite befindet; wobei auf der klebefreundlichen Oberfläche der Trägerfolie eine entfernbare Abdeckschicht derart aufgebracht ist, dass die Haftkleberschicht eine Haftung auf einer der klebefreundlichen Oberfläche der Trägerfolie gegenüberliegende Oberfläche der entfernbaren Abdeckschicht von kleiner oder gleich 2,50 N/50 mm, bevorzugt kleiner oder gleich 1,25 N/50 mm, gemessen gemäß Finat FTM 10, aufweist, und/oder wobei die Haftkleberschicht eine Haftung auf der klebefreundlichen Oberfläche von kleiner oder gleich 2,50 N/50 mm, bevorzugt kleiner oder gleich 1,25 N/50 mm, gemessen gemäß Finat FTM 10, aufweist.

Gemäß bestimmten Ausführungsformen, bei denen die entfernbare Abdeckschicht vorhanden ist, verbleibt die entfernbare Abdeckschicht beim Auftrennen, z.B. Entstapeln oder Abrollen, auf der klebefreundlichen Oberfläche der Trägerfolie.

Zudem offenbart ist ein Verfahren zur Herstellung einer einseitig selbstklebenden Klebefolie umfassend,
- mindestens eine Trägerfolie, wobei die Trägerfolie auf einer Seite eine klebefreundliche Oberfläche aufweist; und
- eine Haftkleberschicht, welche sich auf einer der Umgebung zugewandten Seite der Trägerfolie auf der der klebefreundlichen Oberfläche gegenüberliegenden Seite befindet;
wobei auf der klebefreundlichen Oberfläche der Trägerfolie eine entfernbare Abdeckschicht derart aufgebracht wird, dass die Haftkleberschicht auf einer der klebefreundlichen Oberfläche der Trägerfolie gegenüberliegende Oberfläche der entfernbaren Abdeckschicht eine Haftung von kleiner oder gleich 2,50 N/50 mm, bevorzugt kleiner oder gleich 1,25N/50 mm, gemessen gemäß Finat FTM 10, aufweist,
wobei die Haftkleberschicht auf eine der Umgebung zugewandten, der klebefreundlichen Oberfläche gegenüberliegenden Seite der Trägerfolie aufgebracht wird und die entfernbare Abdeckschicht auf der klebefreundlichen Oberfläche der Trägerfolie aufgebracht wird, wobei die entfernbare Abdeckschicht vor, während oder nach der ersten Haftkleberschicht aufgebracht wird; und/oder
wobei die Haftkleberschicht auf die Trägerfolie auf der der klebefreundlichen Oberfläche gegenüberliegenden Seite der Trägerfolie aufgebracht wird, wobei die Haftkleberschicht auf der klebefreundlichen Oberfläche der Trägerfolie eine Haftung von kleiner oder gleich 2,50 N/50 mm, bevorzugt kleiner oder gleich 1,25 N/50 mm, gemessen gemäß Finat FTM 10, aufweist.

Mit diesem Verfahren kann insbesondere die erfindungsgemäße einseitig selbstklebende Klebefolie hergestellt werden.

Zudem bezieht sich die vorliegende Erfindung auf ein Verfahren zum, insbesondere vollflächigen, Auftragen einer erfindungsgemäßen einseitig selbstklebenden Klebefolie auf einem Untergrund, z.B. einem Boden, einer Treppe oder einer Wand, umfassend: Aufbringen der einseitig selbstklebenden Klebefolie auf den Untergrund, Anreiben und/oder Anrollen der einseitig selbstklebenden Klebefolie auf dem Untergrund, ggf. Entfernen der entfernbaren Abdeckschicht der einseitig selbstklebenden Klebefolie und ggf. Aufbringen von einem Klebstoff, einem Abrieb und/oder einer Spachtelmasse auf der klebefreundlichen Oberfläche der einseitig selbstklebenden Selbstklebefolie.

Weiterhin offenbart ist die Verwendung der erfindungsgemäßen einseitig selbstklebenden Klebefolie zum, insbesondere vollflächigen, Auftragen eines, bevorzugt vom Haftkleber der Haftkleberschicht verschiedenen, Klebstoffes und/oder einer Spachtelmasse auf einen Untergrund.

Weitere Aspekte der vorliegenden Erfindung sind den abhängigen Ansprüchen und der detaillierten Beschreibung zu entnehmen.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung, welches hier einen Fachmann auf dem Gebiet für Bauklebstoffe, insbesondere für die Entwicklung von Selbstklebefolien für Bauanwendungen, insbesondere für die Klebung von Bodenbelägen oder Aufbringung von Spachtelmassen auf Böden, gemeinhin verstanden wird.

Die Finat FTM 10 kann beispielsweise dem FINAT Technical Handbook in der 9. Edition, 2014 entnommen werden,
Eine klebefreundlichen Oberfläche ist eine Oberfläche, auf der mit konventionellen, im Bau üblichen Klebstoffen eine normgerechte Haftung erzielt wird; z.B. mit Bodenbelagsklebstoffen Schälkräfte von mindestens 0,5 N/mm gemessen angelehnt an die DIN EN 1372:2015, mit Parkettklebstoffen ein Haftzugwert von mindestens 1,0 N/mm², gemessen angelehnt an die DIN EN 14293:2006, mit mineralischen Fliesenklebstoffen ein Haftzugwert von mindestens 0,5 N/mm², gemessen angelehnt an SN EN 1348:2007, mit Spachtelmassen ein Haftzugwert von mindestens 1,0 N/mm², gemessen angelehnt an DIN EN 13892-8:2003, bzw. mit Haftklebstoffen für Bauanwendungen Schälkräfte von mindestens 5,0 N/25 mm, gemessen angelehnt an die DIN EN 1939:2003, erreicht werden.

Im Rahmen der Erfindung ist eine Folie ein ausreichend dünnes Material als Grundlage, um einen Haftkleber aufzubringen. Diese ist nicht auf ein bestimmtes Material beschränkt. Eine Trägerfolie ist somit ein Träger in Form einer Folie, also eines ausreichend dünnen Materials. Diese kann ein- oder mehrschichtig aufgebaut sein und als mehrschichtige Trägerfolie aus gleichen und/oder verschiedenen Schichten bestehen. Beispielsweise ist die Trägerfolie einschichtig. Gemäß anderen Beispielen weist die Trägerfolie zwei, drei, vier oder mehr Schichten auf. Die Dicke der Folie ist nicht besonders beschränkt, solange sie noch flexibel ist, und kann je nach Anwendung geeignet angepasst sein.

Ein Haftkleber ist ein physikalisch haftender Klebstoff, welcher nach dem Auftragen auf ein Trägermaterial, wie eine Trägerfolie, viskoelastisch und dauerklebrig bleibt und dann durch Druck auf ein Substrat aufgebracht werden kann und dort haften bleibt. Im Gegensatz zu chemisch oder physikalisch härtenden Klebstoffen weisen Haftklebstoffe keine Abbindprozesse auf sondern bauen die Haftung alleine durch Wechselwirkungen zwischen den Oberflächen der in Kontakt stehenden Materialien auf.

Haftkleberschichten bzw. Haftklebstoffschichten, z.B. von Klebebändern, sind haftklebrig aufgrund ihrer chemisch-physikalischen Eigenschaften, wobei die Adhäsion über physikalische Effekte bestimmt wird. Im Gegensatz zu manchen Reaktivklebstoffen können Haftkleberschichten keine chemischen Bindungen mit einem Substrat ausbilden. Wesentlich für die Ausbildung der Adhäsion sind mikroskopische Grenzflächeneffekte, z.B. die Benetzung der Substratoberfläche, welche über die "Weichheit" der Haftkleberschicht und der Oberflächenstruktur des Untergrundes sowie den molekularen elektrischen Eigenschaften der Oberflächen der Klebepartner mit bestimmt wird. Im Wesentlichen ist es jedoch wichtig, einen möglichst großflächigen, innigen Kontakt zwischen einer Haftklebstoffschicht und einem Substrat zu erreichen.

Viele Klebstoffsysteme nutzen Aggregatszustandsänderungen, z.B. durch Trocknen, Vernetzen, Abkühlen etc., um einerseits den gewünschten Flächenkontakt zu erreichen und andererseits eine ausreichende Adhäsion und Kohäsion für die Kraftübertragung, sprich Klebewirkung, aufzuweisen. Diese Aggregatszustandsänderungen werden durch chemische (z.B. Vernetzen, Polymerisieren, etc.) oder physikalische (z.B. Abkühlen, Verdunsten von Lösemitteln, etc.) Abbindprozesse bewirkt. Diese Möglichkeiten sind den Haftkleberschichten versagt. Diese müssen genügend "weich" für einen innigen Flächenkontakt und gleichzeitig genügend "hart" bzw. kohäsiv sein, um die Klebekräfte übertragen zu können. Haftkleber sind also viskoelastische Materialien. Diese Materialien sind keineswegs reine Stoffe sondern immer technische Stoffgemenge, bzw. Materialien, welche aus einer Vielzahl von Stoffen, z.B. Polymeren unterschiedlicher Molekularmasse, unterschiedlicher Sequenz, Startermoleküle, Emulgatoren, Stabilisatoren, Reaktionsregulatoren, Lösungsvermittler etc., aufgebaut sind. Die für die Eigenschaften der resultierenden Materialien wichtigen Größen sind dem Fachmann für die Entwicklung chemisch-technischer Produkte im Bauwesen hierbei nicht zugänglich.

Allgemein wird postuliert, dass für eine Haftklebrigkeit die Glasübergangstemperatur der Haftklebstoffschicht mindestens 15 K bis ca. 35 K unter der Verarbeitungstemperatur liegen muss. Des Weiteren wird die Adhäsion über diverse Anziehungs- und Abstossungskräfte z.B. Van der Waals Kräfte, Dipolkräfte etc., beeinflusst. Hier spielt die chemische Gestalt der beteiligten Oberflächen eine wesentliche Rolle, wobei diese in der Praxis niemals in ausreichender Detailtiefe bekannt sind.

Trotz vielen Vorstellungen über Adhäsion gibt es kein verlässliches, berechenbares Modell, wie zu einem bestimmten Substrat die entsprechende Adhäsion erreicht werden kann. Bekannt ist jedoch, dass die Adhäsion nicht nur von den Eigenschaften einer Haftklebstoffschicht oder den Eigenschaften einer Substratoberfläche bestimmt wird, sondern erst durch die Wechselwirkung zwischen den jeweiligen Oberflächen entsteht. Dies bedeutet, dass mit einer Haftklebstoffschicht auf diversen Substratoberflächen unterschiedliche Adhäsion erlangt wird. Generell sind dem Fachmann für die Entwicklung chemisch-technischer Produkte die Struktur und die Eigenschaften der Substratoberflächen nur unzulänglich bekannt und keine detaillierten Informationen über den genauen chemischen Aufbau der Rohstoffe bekannt. Alleine durch empirische Untersuchungen können die Adhäsionseigenschaften ermittelt werden und so ein passendes Produkt entwickelt werden. In der Realität muss der Fachmann daher für die Entwicklung chemisch-technischer Produkte aus den vorhandenen Rohstoffmöglichkeiten, passende Lösungsansätze formulieren und diese gezielt prüfen. Zusammenfassend sind die detaillierten chemischen Bestandteile der Klebstoffe für die technische Entwicklung von selbstklebenden Produkten nicht relevant, da einerseits die relevanten Informationen der Oberflächen, der Klebstoffe und weiterer beteiligter Materialien sowie eine anwendbare, verlässliche Theorie über die Klebemechanismen gänzlich fehlen.

Deshalb werden Haftkleber bzw. Haftklebstoffe und daraus hergestellte Haftkleberschichten nach wie vor üblicherweise über Parameter charakterisiert, wie dies z.B. aus "Pressure Sensitive Adhesive Tapes, A guide to their function, design, manufacture, and use", John Johnston, 2013, Kapitel 2 "How pressure sensitive adhesives work", Kapitel 8 "Design", und Kapitel 9 "Testing" hervorgeht. Die Entwicklung solcher Parameter ist daher für den Fachmann auf dem Gebiet von herausragendem Interesse, um diese bei Produktweiterentwicklungen wie auch in konkreten Projekten berücksichtigen zu können.

Zu beachten ist hierbei, dass eine Haftung von Klebstoffen, beispielsweise Haftklebstoffen oder anderen Klebstoffen, geeignet eingestellt werden kann, beispielsweise durch ein Abstumpfen, welche eine Reduzierung der Klebrigkeit eines Haftkleber erzielen kann. Ein Abstumpfen kann beispielsweise durch einen Zusatz von Partikeln und/oder einer Polymerlösung und/oder Wachs, etc. und/oder ein Vernetzen erreicht werden.

Die vorliegende Erfindung betrifft in einem ersten Aspekt eine einseitig selbstklebende Klebefolie, umfassend,
- mindestens eine Trägerfolie, wobei die Trägerfolie auf einer Seite eine klebefreundliche Oberfläche aufweist; und
- eine Haftkleberschicht, welche sich auf einer der Umgebung zugewandten Seite der Trägerfolie auf der der klebefreundlichen Oberfläche gegenüberliegenden Seite befindet; wobei auf der klebefreundlichen Oberfläche der Trägerfolie eine entfernbare Abdeckschicht derart aufgebracht ist, dass die Haftkleberschicht eine Haftung auf einer der klebefreundlichen Oberfläche der Trägerfolie gegenüberliegende Oberfläche der entfernbaren Abdeckschicht von kleiner oder gleich 2,50 N/50 mm, bevorzugt kleiner oder gleich 1,25 N/50 mm, gemessen gemäß Finat FTM 10, aufweist, und/oder wobei die Haftkleberschicht eine Haftung auf der klebefreundlichen Oberfläche von kleiner oder gleich 2,50 N/50 mm, bevorzugt kleiner oder gleich 1,25 N/50 mm, gemessen gemäß Finat FTM 10, aufweist.

Gemäß bestimmten Ausführungsformen haftet die entfernbare Abdeckschicht auf der klebefreundlichen Oberfläche mit begrenzten Kräften, und weist insbesondere eine Haftung von 0,05 bis 2,50 N/50 mm, bevorzugt 0,10 bis 1,25 N/50 mm, gemessen gemäß Finat FTM 10, auf.

Gemäß bestimmten Ausführungsformen verbleibt die entfernbare Abdeckschicht bei einem Auftrennen, z.B. Entstapeln oder Abrollen, der einseitig selbstklebenden Klebefolie, auf der klebefreundlichen Oberfläche der Trägerfolie, beispielsweise wenn diese als Rolle oder Stapel bereitgestellt wird. Insbesondere kann die entfernbare Abdeckschicht damit auch beim Auftragen auf einen Untergrund auf dem Folienträger verbleiben, was die Applikation der einseitig selbstklebenden Klebefolie auf den Untergrund erleichtert und insbesondere ein einfaches, manuelles, faltenfreies Aufbringen ermöglicht, sodass auch breitere einseitig selbstklebende Klebefolien einfach auf den Untergrund aufgebracht werden können.

Die Trägerfolie ist erfindungsgemäß nicht besonders beschränkt, sofern sie auf einer Seite eine klebefreundliche Oberfläche aufweist. Die Trägerfolie kann hierbei in Form einer einschichtigen oder mehrschichtigen Folie mit zwei oder mehr Schichten oder auch als Verbundwerkstoff ausgebildet sein. Die Trägerfolie kann einschichtig oder mehrschichtig, z.B. auch in einem Verbund mit einem Gewebe, Papier und/oder Vlies, ausgebildet sein. Insbesondere ist sie für den Haftkleber der Haftkleberschicht nicht durchlässig.

Das Material der Trägerfolie ist nicht besonders beschränkt, insofern die Haftkleberschicht aufgebracht werden kann. Beispielsweise kann die Trägerfolie als Metallfolie bzw. Metallschicht und/oder Polymerfolie ausgebildet sein, z.B. auch in Verbund mit einem Gewebe, Papier und/oder Vlies. Als Polymer kann das Material auch geschäumt sein. Gemäß bestimmten Ausführungsformen umfasst die Trägerfolie ein Polymermaterial oder besteht daraus. Das Polymer der Trägerfolie ist hierbei nicht besonders beschränkt und kann beispielsweise Polymermaterialien umfassen bzw. aus Polymermaterialien bestehen, welche ausgewählt sind aus der Gruppe, bestehend aus Polyethylen (PE), Polypropylen (PP), Polyamide (PA), Polyester (PES), Polyethylenpropylen (PEP), Polyethylenterephthalat (PET), Polymethylmethacrylat (PMMA), Polyolefine (PO), Polyvinylchlorid (PVC), Polycarbonat (PC), Polyurethan (PUR), und/oder Copolymeren und/oder Mischungen davon und/oder besteht daraus. Falls für die Trägerfolie oder eine Schicht in einer mehrschichtigen Trägerfolie ein Schaum eingesetzt wird oder mit eingesetzt wird, so kann der beispielsweise ein Polymermaterial aus der Gruppe Polyethylen (PE), Polypropylen (PP), aromatische und/oder aliphatische Polyamide (PA), aliphatische und/oder aromatische Polyester (PES), Polyethylenpropylen (PEP), Polyether, Polyurethan, Polyethylenterephthalat (PET), Polylactid, Polyolefine, und/oder Polyvinylchlorid und/oder Copolymeren und/oder Mischungen davon umfassen. Die beispielhaft genannten Materialien schränken die Trägerfolie jedoch nicht ein.

Die Oberfläche der Trägerfolie kann für das Herstellen der klebefreundlichen Oberfläche beispielsweise klebefreundlich behandelt werden, z.B. mit einer Koronabehandlung und/oder einer Plasmabehandlung und/oder einer Primerbeschichtung bzw. Haftvermittlerschicht, und/oder durch Aufbringen eines geeigneten klebefreundlichen Materials, z.B. eines geeigneten Papieres, Gewebes und/oder Vlieses, welche nicht besonders beschränkt sind und auf das Material der Trägerfolie abgestimmt sein können. Auch ist die klebefreundliche Trägeroberfläche nicht besonders beschränkt und kann beispielsweise ein Polymer, einen Naturstoff, ein Metall bzw. eine Legierung, eine Keramik und/oder eine durch eine Oberflächenbehandlung modifizierte Oberfläche umfassen. Sie kann ebenfalls glatt oder strukturiert sein. Generell kommen als klebefreundliche Oberflächen beispielsweise Oberflächen der Trägerfolie, die mit einer geeigneten Oberflächenbehandlung, z.B. einer Koronabehandlung und/oder einer Plasmabehandlung, behandelt wurden; Oberflächen der Trägerfolie, auf die eine Primerbeschichtung bzw. eine Haftvermittlerschicht aufgebracht wurde; und/oder Oberflächen der Trägerfolie, auf die ein geeignetes klebefreundliches Material, z.B. ein Papier, Gewebe und/oder Vlies aufgebracht wurde, in Frage.

Es können also auch jegliche Kombinationen einer geeigneten Oberflächenbehandlung, eines Aufbringens einer Haftvermittlerschicht und eines Aufbringens eines klebefreundlichen Materials, z.B. eines Papiers, Gewebes und/oder Vlieses, zur Herstellung der klebefreundlichen Oberfläche der Trägerfolie verwendet werden. Beispielsweise kann eine Oberflächenbehandlung der Trägerfolie stattfinden, und darauf kann eine Haftvermittlerschicht und/oder ein klebefreundliches Material, z.B. ein Papier, Gewebe und/oder Vlies, aufgebracht werden. Auch können z.B. auf der Oberfläche der Trägerfolie eine Haftvermittlerschicht und ein klebefreundliches Material, z.B. ein Papier, Gewebe und/oder Vlies, aufgebracht werden. Ebenso können im Anschluss diese Schichten beispielsweise mit einer Oberflächenbehandlung versehen werden.

Natürlich ist es auch möglich, dass nur eine geeignete Oberflächenbehandlung, beispielsweise eine Koronabehandlung und/oder eine Plasmabehandlung, ein Aufbringen einer Haftvermittlerschicht, oder ein Aufbringen eines klebefreundlichen Materials, z.B. eines Papiers, Gewebes und/oder Vlieses, zur Herstellung der klebefreundlichen Oberfläche der Trägerfolie erfolgt.

Die Oberflächenbehandlung, das Aufbringen einer Haftvermittlerschicht sowie das Aufbringen eines klebefreundlichen Materials sind hierbei jeweils nicht besonders beschränkt.

Als Oberflächenbehandlung kommen beispielsweise eine Koronabehandlung und/oder eine Plasmabehandlung in Frage, welche nicht besonders beschränkt sind und auf das Material der Trägerfolie geeignet abgestimmt werden können.

Wenn beispielsweise eine Haftvermittlerbeschichtung zum Einsatz kommt, so ist diese ebenfalls nicht beschränkt und kann auch beispielsweise auf das Material der Trägerfolie abgestimmt sein. Beispielsweise kann eine Haftvermittlerschicht ein Polymermaterial umfassen, welches nicht besonders beschränkt ist, z.B. Polyacrylat, Polystyrol, Polyvinylester, Polyvinylalkohol, Polyethylen, Polypropylen, Polyvinylchlorid, Polyvinylidenchlorid, Polyurethan, und/oder Copolymere und/oder Mischungen davon.

Auch das klebefreundliche Material ist nicht besonders beschränkt und kann beispielsweise ein Papier, Gewebe und/oder ein Vlies umfassen. Das Papier, das Gewebe und das Vlies sind hierbei nicht besonders beschränkt. Geeignete Vliese oder Gewebe können beispielsweise ein Material umfassen, dass ausgewählt ist aus einer Gruppe, umfassend Glas, Metall, Karbon, Zellwolle, Polymere wie Polyethylen, Polypropylen, Polyamid, Polyester, Polyacrylnitril, und/oder Copolymere und/oder Mischungen davon, und/oder Kombinationen davon. Dieses klebefreundliche Material kann geeignet auf der Oberfläche der Trägerfolie aufgebracht sein, z.B. abhängig vom Material der Oberfläche der Trägerfolie und/oder dem klebefreundlichen Material. Beispielsweise kann das klebefreundliche Material durch Aufkleben, Anschmelzen, etc. aufgebracht werden.

Generell ist die Herstellung der klebefreundlichen Oberfläche der Trägerfolie nicht beschränkt, insbesondere solange z.B. übliche Bauklebstoffe gut auf der klebefreundlichen Oberfläche haften können.

Auf der anderen Seite der Trägerfolie, also der der klebefreundlichen Oberfläche gegenüberliegenden Seite, ist sie insbesondere so beschaffen, dass die Haftkleberschicht, die darauf aufgebracht ist, gut darauf haftet.

Die Haftkleberschicht ist ebenfalls nicht besonders beschränkt. Insbesondere ist das Material der Haftkleberschicht nicht besonders beschränkt, und kann auch Materialmischungen umfassen. Die Haftkleberschicht kann z.B. als Schmelzklebstoff, lösemittelbasierter Klebstoff oder Dispersionsklebstoff ausgeführt sein. Beispielhaft kann die Haftkleberschicht aus einem Haftklebermaterial bestehen oder dieses umfassen, welches ausgewählt ist aus der Gruppe bestehend aus Haftklebstoffen basierend auf Kautschuk, Naturkautschuk Synthesekautschuk wie zum Beispiel Styrol-Butadien-Blockcopolymeren (SBS), Chloropren-Kautschuk, Polyurethan, Styrolacrylat, Vinylacetat, Vinylacetat-Ethylen, Vinylversatat, Polyethylenvinylacetat, Polyethylenvinylversatat, Polyacrylat, und/oder deren Copolymerisaten, und/oder Mischungen davon. Diese schränken die Haftkleberschicht jedoch nicht ein.

Eine beispielhafte, einseitig selbstklebende Klebefolie mit klebefreundlicher Oberfläche ist beispielsweise ein Klebeband, bestehend aus einer Trägerfolie, mit einer Haftkleberschicht und einer gegenüberliegenden Trägerfolienoberfläche welche klebefreundlich gegenüber weiteren Klebstoffen und/oder Spachtelmassen ist.

Um das Verkleben bzw. Verblocken beispielsweise innerhalb einer Rolle oder eines Stapels der erfindungsgemäßen, einseitig selbstklebenden Klebefolie, bzw. allgemein zwischen zwei aufeinanderliegenden einseitig selbstklebenden Klebefolien, zu vermeiden, müssen die Klebkräfte, also die Haftung, zwischen der oberen Oberfläche der einseitig selbstklebenden Klebefolie, beispielsweise eines Klebebandes, und der Haftkleberschicht kleiner oder gleich maximal 2,50 N/50 mm liegen, gemessen gemäß Finat FTM 10. Dem wiederspricht bei der erfindungsgemäßen, einseitig selbstklebenden Klebefolie, dass die klebefreundliche Oberfläche der Trägerschicht klebefreundlich gegenüber diversen konventionellen Klebstoffen und anderen Stoffen, wie Spachtelmassen, für Bauanwendungen sei soll. Diese Diskrepanz kann erfindungsgemäß auf verschiedenen Wegen gelöst werden.

Beispielsweise kann die klebefreundliche Oberfläche der einseitigen selbstklebenden Klebefolie derart beschaffen sein, dass die Haftkleberschicht eine Haftung auf der klebefreundlichen Oberfläche von kleiner oder gleich 2,50 N/50 mm, bevorzugt kleiner oder gleich 1,25 N/50 mm, gemessen gemäß Finat FTM 10, aufweist. Dies kann insbesondere bei schwach haftenden Haftkleberschichten mit einer Haftung von weniger als 15 N/25 mm, bevorzugt kleiner 10 N/25 mm, gemessen nach DIN EN 1939:2003, realisiert werden. Beispielsweise kann dies durch eine Strukturierung der Oberfläche erzielt werden.

Beispielsweise kann eine oberflächliche Struktur auf der oberen, klebefreundlichen Oberfläche der einseitig selbstklebenden Klebefolie, z.B. eines Klebebandes, (klebefreundliche Trägeroberfläche) derart strukturiert werden, dass die Kontaktfläche gegenüber der Haftkleberschicht derart reduziert wird, dass eine Haftung der Haftkleberschicht auf der klebefreundlichen Oberfläche von kleiner oder gleich 2,5 N/50 mm, bevorzugt kleiner oder gleich 1,25N/50 mm, erreicht wird. Indem die klebefreundliche Trägerseite der einseitig selbstklebenden Klebefolie derart strukturiert ist, dass beim Aufrollen die Kontaktfläche zwischen Haftkleberschicht und klebefreundlichen Trägeroberfläche so stark reduziert ist, kann eine Verblockung verhindert werden und andererseits die gesamte Oberfläche klebefreundlich bleiben für die weitere Beklebung mit einem Klebstoff oder Beschichten mit einer Spachtelmasse. Insbesondere bietet sich diese Lösung an für einseitig selbstklebende Klebebänder mit mäßigen Klebekräften der Haftkleberschicht, welche beispielsweise Schälkräfte gemäss DIN EN 1939:2003 kleiner 15 N/25mm, bevorzugt kleiner 10 N/ 25 mm, aufweisen.

Die Strukturierung kann zum Beispiel durch eine geprägte Trägeroberfläche oder durch das Aufbringen und festen Verbinden einer textilen Struktur, z.B. Zellwolle, Baumwolle, etc., auf der Trägeroberfläche realisiert werden, wobei die textile Struktur nicht hierauf beschränkt ist. Die textile Struktur kann hierbei geeignet auf der Trägerfolie befestigt werden, beispielsweise durch einen geeigneten Klebstoff, durch Verschmelzen, etc. wobei die Befestigung nicht besonders beschränkt ist.

Die Prägung und/oder die textile Struktur können die Verkrallung von einem weiteren Klebstoff weiter erhöhen. Beispielsweise bieten sich eine textile Struktur oder eine Strukturierung, z.B. eine Prägung, an.

Gemäß bestimmten Ausführungsformen weist die klebefreundliche Oberfläche der Trägerfolie hierfür eine textile Struktur auf und/oder ist strukturiert.

Beispielsweise kann z.B. eine Haftung der Haftkleberschicht auf der klebefreundlichen Oberfläche von kleiner oder gleich 2,5 N/50 mm, bevorzugt kleiner oder gleich 1,25N/50 mm, erreicht werden, indem die haftkleberkontaktierende Oberfläche der klebefreundlichen Oberfläche durch eine Strukturierung auf z.B. 20 % (Fläche/Fläche) oder weniger, bevorzugt 10 % oder weniger, weiter bevorzugt 5 % oder weniger, der Gesamtgrundfläche reduziert wird bzw. bei der textilen Struktur die haftkleberkontaktierende Oberfläche der klebefreundlichen Oberfläche auf z.B. ≤ 20 %, bevorzugt ≤ 10 %, weiter bevorzugt ≤ 5 %, der Gesamtgrundfläche reduziert wird und dadurch die Klebkräfte zwischen der Haftkleberschicht der einseitig selbstklebenden Klebefolie und der strukturierten, klebefreundlichen Oberfläche oder der textilen Struktur daraus folgend auf entsprechend ca. ≤ 20 %, bevorzugt ≤ 10 %, weiter bevorzugt ≤ 5 %, der Klebkräfte auf einer entsprechend glatten Oberfläche reduziert wird. Hierdurch kann die 100% Klebekraft zwischen Haftkleberschicht und der klebefreundlichen Trägeroberfläche entsprechend nach oben erweitert werden, hier beispielsweise auf 25 N/25mm bzw. 1,0 N/mm ohne eine Rolle oder einen Plattenstapel zu verblocken. Eine erfindungsgemäße Strukturierung oder textile Struktur kann z.B. durch eine nicht weiter beschränkte textile Struktur, z.B. ein grobes Gewebe, oder eine Prägung erreicht werden, welche ebenfalls nicht besonders beschränkt ist.

Gemäß bestimmten Ausführungsformen macht die oberste, der Umgebung zugewandte Oberfläche der textilen Struktur und/oder der Strukturierung der klebefreundlichen Oberfläche der Trägerfolie kleiner oder gleich 20 %, beispielsweise kleiner oder gleich 10 %, beispielsweise kleiner oder gleich 5 %, der normalen Oberfläche der textilen Struktur und/oder der Strukturierung aus. Beispielsweise kann dies dadurch bestimmt werden, dass die Oberfläche mit Tinte behandelt wird und auf mit einem feinen Raster gedruckt wird und die Rasterung dann ausgewertet wird.

In einer weiteren Ausführungsform können die obersten Spitzen der Strukturierung derart haftungsmindernd ausgerüstet werden, dass nur diese haftungsmindernd ausgerüstet werden und die restliche Oberfläche klebefreundlich bleibt. Dies ermöglicht es, auch stärker haftende Haftkleberschichten zu verwenden.

Bei einseitig selbstklebenden Klebefolien mit einer stärker klebenden Haftkleberschicht kann also die textile Struktur oder die Prägung auf den obersten Spitzen der Struktur zusätzlich mit einer haftungsmindernden Schicht versehen werden, die bevorzugt nicht durchgängig über die ganze Fläche und Struktur verlaufen darf, und dennoch eine ausreichend große haftungsfreundliche Oberfläche auf der Trägeroberseite verbleibt für eine sichere Klebung durch einen folgenden Klebstoff. Gemäß bestimmten Ausführungsformen wird die textile Struktur oder die Prägung auf den obersten Spitzen der Struktur zusätzlich mit einer haftungsmindernden Schicht derart versehen, dass diese nicht durchgängig über die ganze Fläche und Struktur verläuft. Hierbei ist die haftungsmindernde Schicht nicht besonders beschränkt. Beispielsweise kann sie chemisch und/oder physikalisch modifiziert sein und/oder beschichtet sein und/oder haftungsmindernde Materialien wie Polysiloxane, Polytetrafluorethylen, etc. aufweisen

Gemäß bestimmten Ausführungsformen weist somit die textile Struktur und/oder die Strukturierung der klebefreundlichen Oberfläche der Trägerfolie auf einer der Umgebung zugewandten Seite eine haftungsmindernde Oberfläche auf, wobei diese bevorzugt nur die oberste, der Umgebung zugewandte Oberfläche der textilen Struktur und/oder der Strukturierung der Trägerfolie und somit maximal 20 %, bevorzugt maximal 10 %, weiter bevorzugt maximal 5 %, der gesamten Oberfläche der der Trägerfolie abgewandten Seite ausmacht.

Gemäß bestimmten Ausführungsformen ist die textile Struktur mit der Trägerfolie verbunden und/oder die Strukturierung durch eine Prägung der Trägerfolie hergestellt.

Zudem kann in bevorzugten Ausführungsformen auf der klebefreundlichen Trägeroberfläche alternativ oder zusätzlich eine entfernbare Abdeckschicht aufgebracht werden, die bevorzugt schwach auf der klebefreundlichen Trägeroberfläche haften kann. In weiteren Ausführungsfomen kann die gegenüberliegende Seite der Abdeckschicht haftungsmindernd ausgerüstet sein, um eine Verblockung der einseitigen selbstklebenden Klebefolie beispielsweise beim Aufrollen oder Stapeln, z.B. einer Klebebandrolle oder eines Klebeplattenstapels, zu vermeiden. Auch in dieser Ausführungsform kann eine Strukturierung und/oder eine textile Struktur auf der klebefreundlichen Trägeroberfläche aufgebracht sein.

Die entfernbare, bevorzugt schwach haftende, Abdeckschicht ist nicht näher bestimmt. Sie kann beispielsweise ein Papier, ein Vlies, ein Gewebe, eine Schicht, beispielsweise eine Folienschicht, oder eine Kombination davon umfassen oder sein.

Damit kann das einseitig selbstklebende Klebeband verblockungsfrei aufgerollt und abgerollt werden, auf den Untergrund komfortabel aufgebracht und angerieben werden. Dabei ist die klebefreundliche Oberfläche der einseitig selbstklebenden Klebefolie durch die, z.B. schwach haftende, entfernbare Abdeckschicht vor Verletzungen, Verschmutzungen und anderen Beschädigungen oder Beeinträchtigungen geschützt. In einem späteren Schritt kann die klebefreundliche Klebefolienoberfläche durch einfaches Abschälen der entfernbaren Abdeckschicht freigelegt werden und steht für das weitere Bekleben in einwandfreiem Zustand bereit.

Gemäß bestimmten Ausführungsformen ist die entfernbare Abdeckschicht auf der klebefreundlichen Oberfläche der Trägerfolie vorhanden, wobei die entfernbare Abdeckschicht auf einer der klebefreundlichen Oberfläche der Trägerfolie zugewandten Seite eine Haftschicht aufweist, welche auf der klebefreundlichen Oberfläche der Trägerfolie eine Haftung von 0,05 bis 2,50 N/50 mm, gemessen gemäß Finat FTM 10, aufweist. Hierdurch kann diese bei einem Abrollen, Abnehmen von einem Stapel, etc. auf der Trägerfolie verbleiben, ohne die Selbstklebefolie oder die klebefreundliche Oberfläche zu schädigen, für die weitere Verwendung aber einfach abgetrennt werden.

Die Haftschicht ist hierbei nicht besonders beschränkt. Beispielsweise kann die Haftschicht eine sehr schwach haftende Polymerschicht sein, z.B. eine Abmischung von Haftklebstoffen und haftungsmindernden Zusätzen wie Füllstoffen (z.B. Festkörperpartikel, anorganisch oder organisch), Wachsen, Polymerpartikeln, etc. Die Haftschicht kann z.B. als Schmelzklebstoff, lösemittelbasierter Klebstoff oder Dispersionsklebstoff ausgeführt sein. Beispielhaft kann die Haftschicht aus einem Haftmaterial bestehen oder dieses umfassen, welches nicht besonders beschränkt ist. Das Haftmaterial kann hierbei beispielsweise einen Haftklebstoff und eine haftungsmindernde Komponente umfassen, die jeweils nicht besonders beschränkt sind. Beispielsweise kann der Haftklebstoff ausgewählt sein aus der Gruppe bestehend aus Haftklebstoffen basierend auf Kautschuk, Naturkautschuk Synthesekautschuk wie zum Beispiel Styrol-Butadien-Blockcopolymeren (SBS), Chloropren-Kautschuk, Polyurethan, Styrolacrylat, Vinylacetat, Vinylacetat-Ethylen, Vinylversatat, Polyethylenvinylacetat, Polyethylenvinylversatat, Polyacrylat, und/oder deren Copolymerisaten, und/oder Mischungen davon, wobei der Haftklebstoff nicht darauf beschränkt ist. Die haftungsmindernde Komponente kann beispielsweise aus einem Material bestehen oder ein Material umfassen, welches ausgewählt ist aus der Gruppe bestehend aus Partikeln, (z.B. in Form von Dispersion, Pulver und/oder Fasern) basierend auf Wachsen, Stärke, Polymeren, Mineralstoffen, Zellstoffen und/oder Mischungen davon, wobei die haftungsmindernde Komponente nicht darauf beschränkt ist.

Die beispielhaft genannten Haftmaterialien schränken die Haftschicht jedoch nicht ein, solange mit dieser auf der klebefreundlichen Oberfläche der Trägerfolie insbesondere eine Haftung von 0,05 bis 2,50 N/50 mm, gemessen gemäß Finat FTM 10 erzielt wird.

Durch die Anwesenheit der Haftschicht kann die Klebefreundlichkeit der klebefreundlichen Oberfläche der Trägerfolie effektiv beibehalten werden, und die Oberfläche verbleibt unverletzt, wobei die entfernbare Abdeckschicht jedoch auch leicht manuell entfernt werden kann. Entsprechend ergibt sich insbesondere bei Anwesenheit einer entfernbaren Abdeckschicht mit Haftschicht eine leichte manuelle Verarbeitung beim Auftragen auf einen Untergrund, da die entfernbare Abdeckschicht zunächst auf der einseitig selbstklebenden Klebefolie verbleiben kann, beispielsweise bei einem Abrollen von einer Rolle oder einem Entstapeln von einem Stapel, und somit auch mit der einseitig selbstklebenden Klebefolie auf den Untergrund aufgebracht werden kann, im Anschluss aber auch einfach von der einseitig selbstklebenden Klebefolie abgetrennt werden kann. Hierbei werden weder die Haftung der einseitig selbstklebenden Klebefolie auf dem Untergrund durch die Haftkleberschicht noch deren Weiterverarbeitung durch eine Beschädigung der klebefreundlichen Oberfläche beeinträchtigt.

Gemäß bestimmten Ausführungsformen ist die entfernbare Abdeckschicht auf der klebefreundlichen Oberfläche der Trägerfolie vorhanden, wobei die entfernbare Abdeckschicht auf einer der klebefreundlichen Oberfläche gegenüberliegenden, der Umgebung zugewandten Seite eine haftungsmindernde Schicht aufweist. Diese ist bei einem Aufrollen der einseitig selbstklebenden Klebefolie oder einem Aufeinanderstapeln dann beispielsweise in Kontakt mit der Haftkleberschicht. Hierdurch kann die Haftkleberschicht jedoch beim Abrollen, Abheben vom Stapel, etc. wieder einfach von der entfernbaren Abdeckschicht abgetrennt werden.

Die haftungsmindernde Schicht der schwach haftenden Abdeckschicht ist nicht näher bestimmt. Sie kann beispielsweise ein Silikon, ein Wachs, ein polyfluoriertes Polymer wie Teflon, POM (Polyoxymethylen), etc., umfassen oder sein, ist jedoch nicht darauf beschränkt.

Gemäß bestimmten Ausführungsformen ist die entfernbare Abdeckschicht auf der klebefreundlichen Oberfläche der Trägerfolie vorhanden, wobei die entfernbare Abdeckschicht auf einer der klebefreundlichen Oberfläche der Trägerfolie zugewandten Seite eine Haftschicht aufweist, wobei die Haftung der Haftschicht der entfernbaren Abdeckschicht auf der klebefreundlichen Oberfläche der Trägerfolie mindestens etwa doppelt so hoch, beispielsweise dreimal so hoch ist wie die Haftung der Haftkleberschicht der selbstklebenden Klebefolie auf der haftungsmindernden Schicht der Abdeckschicht. Hierdurch kann insbesondere vermieden werden, dass sich die entfernbare Abdeckschicht beim Ablösen der Haftkleberschicht, z.B. bei einem Abrollen oder Abnehmen von einem Stapel, ablöst. Es wurde insbesondere gefunden, dass die Klebekraft der schwach haftenden, Haftschicht der entfernbaren Abdeckschicht auf der klebefreundlichen Trägeroberfläche mindestens rund doppelt so hoch sein sollte wie die Klebekräfte der Haftkleberschicht der einseitig selbstklebenden Klebefolie, z.B. eines Klebebandes oder einer Klebeplatte, auf der haftungsmindernden Schicht der entfernbaren Abdeckschicht.

Im weiteren wurde gefunden, dass für eine praktikable Anwendung die Haftung der schwach haftenden Haftschicht auf der klebefreundlichen Trägeroberfläche im Bereich zwischen 0,05 und 2,50 N/50mm, gemessen gemäß Finat FTM 10, liegen soll und die Haftung der Haftkleberschicht der einseitig selbstklebenden Klebefolie, z.B. einer Selbstklebefolie oder einer Klebeplatte, auf den zu beklebenden Untergründen mindestens doppelt so hoch sein soll wie die Haftung der Haftschicht der ablösbaren Abdeckschicht auf der klebefreundlichen Trägeroberfläche, wobei insbesondere die effektiv praktikablen Haftungswerte der Haftschicht auf die Mindestklebekräfte der Haftkleberschicht der Selbstklebefolie bzw. der Klebeplatte auf den zu beklebenden Untergründen abgestimmt werden können. Diese Klebekräfte können beispielsweise angelehnt an die DIN EN 1939:2003 gemessen werden und sind bevorzugt mindestens doppelt so hoch wie die Haftungswerte der schwach haftenden Haftschicht auf der klebefreundlichen Trägeroberfläche.

Es wurde insbesondere gefunden, dass die Haftung zwischen der schwach haftenden Haftschicht maximal 50 % der Haftung der Haftkleberschicht auf den zu beklebenden Untergründen aufweisen soll, um eine gute Ablösbarkeit der entfernbaren Abdeckschicht zu gewährleisten, ohne die erfindungsgemäße einseitig selbstklebende Klebefolie wieder insgesamt abzutrennen.

Gemäß bestimmten Ausführungsformen beträgt die Haftung der Haftschicht der entfernbaren Abdeckschicht auf der klebefreundlichen Oberfläche der Trägerfolie, gemessen nach Finat FTM 10, maximal 50% der Haftung der Haftkleberschicht der selbstklebenden Klebefolie auf einem zu beklebenden Untergrund, z.B. gemessen angelehnt an die DIN EN 1939:2003. In dieser Hinsicht bedeutet der Ausdruck "angelehnt an die DIN EN 1939:2003", dass die Messung wie in der DIN EN 1939:2003 erfolgt, wobei jedoch der in der Norm angegebene Untergrund durch den zu bestimmenden Untergrund ersetzt ist.

Die Messung der Haftung erfolgt analog DIN EN 1939:2003 unter Verwendung der identischen Prüfverfahren, wobei jedoch projektspezifische Untergründe verwendet werden können. Dies bedeutet, dass die gesamte Prüfung genau nach den Vorgaben der DIN EN 1939:2003 erfolgt, jedoch der dort angegebene Untergrund durch einen projektspezifischen Untergrund ersetzt wird. Normgemäß erfolgt die Messung nach Auftragung nach dem normativ angegebenen Verfahren. Die Prüfung erfolgt in jedem Fall bei Normklima, also bei 23°C und 50% Luftfeuchtigkeit.

Darüber hinaus erfolgt die Messung jedoch gemäß DIN EN 1939:2003. Dazu werden Prüfkörper gemäß DIN EN 1939:2003 beschriebenen Verfahren auf die projektspezifischen Untergründe geklebt und geprüft gemäß den in DIN EN 1939:2003 beschriebenen Verfahren.

Gemäß bestimmten Ausführungsformen ist die Haftung der, z.B. schwach haftenden, Haftschicht im Bereich zwischen 0,05 und 2,50 N/50mm, gemessen gemäß Finat FTM 10, wobei die Haftung der Haftschicht auf der klebefreundlichen Oberfläche der Trägerfolie zumindest ca. doppelt so hoch ist wie die Haftung der Haftkleberschicht der einseitig selbstklebenden Klebefolie, z.B. eines Klebebandes, auf der haftungsmindernden Schicht der Abdeckschicht. Die Haftung der Haftkleberschicht auf der haftungsmindernden Schicht der entfernbaren Abdeckschicht liegt insbesondere im Bereich von 0,05 und 1,25 N/50mm, gemessen gemäß Finat FTM 10.

Insbesondere werden gemäß bestimmten Ausführungsformen auf einer erfindungsgemäßen klebefreundlichen Oberfläche mit konventionellen, im Bau üblichen Klebstoffen eine normgerechte Haftung erzielt; z.B. mit Bodenbelagsklebstoffe Schälkräfte von mindestens 0,5 N/mm gemessen angelehnt an die DIN EN 1372:2015, mit Parkettklebstoffen ein Haftzugwert von mindestens 1,0 N/mm², gemessen angelehnt an die DIN EN 14293:2006, mit mineralischen Fliesenklebstoffen ein Haftzugwert von mindestens 0,5 N/mm², gemessen angelehnt an SN EN 1348:2007, mit Spachtelmassen ein Haftzugwert von mindestens 1,0 N/mm², gemessen angelehnt an EN 13892-8:2003, bzw. mit Haftklebstoffen für Bauanwendungen Schälkräfte von mindestens 5,0 N/25 mm, gemessen angelehnt an die DIN EN 1939:2003, erreicht werden.

Die im Bau üblichen Klebstoffe sind insbesondere Dispersionsklebstoffe, 1K-PU, 2K-PU, 2-K Epoxy oder MS Klebstoffe, welche für die jeweiligen Anwendungen z.B. die Klebung eines Bodenbelages, in Bauanwendungen eingesetzt werden. Diese Klebstoffe sind nicht besonders beschränkt.

Gemäß bestimmten Ausführungsformen wird auf der klebefreundlichen Oberfläche der Trägerfolie mit einem Klebstoff, welcher ausgewählt ist aus Dispersionsklebstoffen, 1K-PU-, 2K-PU-, 2-K Epoxy- oder MS-Klebstoffen, eine normgerechte Haftung erzielt, wobei auf der klebefreundlichen Oberfläche der Trägerfolie bevorzugt mit Bodenbelagsklebstoffen eine Schälkraft von mindestens 0,5 N/mm, gemessen angelehnt an die DIN EN 1372:2015, mit Parkettklebstoffen ein Haftzugwert von mindestens 1,0 N/mm², gemessen angelehnt an die DIN EN 14293:2006, mit mineralischen Fliesenklebstoffen ein Haftzugwert von mindestens 0,5 N/mm², gemessen angelehnt an SN EN 1348:2007, mit Spachtelmassen ein Haftzugwert von mindestens 1,0 N/mm², gemessen angelehnt an EN 13892-8:2003, oder mit Haftklebstoffen für Bauanwendungen, insbesondere für die Klebung von Bodenbelägen oder Treppenbelägen, eine Schälkraft von mindestens 5,0 N/25 mm, gemessen angelehnt an die DIN EN 1939:2003, erhalten wird. Auch hierbei bedeutet der Ausdruck "angelehnt an" in Bezug auf die jeweilige Messung, dass die in der Norm angegebene Oberfläche durch die Oberfläche der Trägerfolie ersetzt wird, anderweitig die Messung aber gemäß der jeweiligen Norm erfolgt. Auch in diesen Messverfahren bedeutet der Ausdruck "angelehnt an", dass die Messung auf der entsprechenden klebefreundlichen Oberfläche erfolgt anstelle der normgemäßen Fläche, jedoch anderweitig die normativen Bedingungen eingehalten werden.

Gemäß bestimmten Ausführungsformen ist die einseitig selbstklebende Klebefolie als Rolle, beispielsweise als Klebeband, oder Platte, beispielsweise Klebeplatte, ausgeführt.

Gemäß bestimmten Ausführungsformen umfasst die erfindungsgemäße selbstklebende Klebefolie eine Bremsschicht für Feuchtigkeit und/oder eine Sperrschicht für Weichmacher, welche jeweils nicht besonders beschränkt sind.

Als Bremsschicht für Feuchtigkeit wird eine Bremse gegenüber migrierender bzw. diffundierender Feuchtigkeit verstanden; zum Beispiel allgemein gegenüber einer Diffusion von Wasser verstanden, zum Beispiel Osmose. Entsprechendes gilt für die Sperrschicht für Weichmacher, die einen Weichmacherdurchtritt verhindern kann. Hierzu können die üblicherweise verwendeten Schichten angewandt werden, welche beispielsweise in die Trägerfolie integriert sein können.

Die mindestens eine Bremsschicht für bzw. gegenüber Feuchtigkeit ist nicht besonders beschränkt, solange sie als Bremse gegenüber Feuchtigkeit wirkt, und kann beispielsweise polymer, metallisch und/oder keramisch, beispielsweise eine Metalloxidschicht, sein.

Als Metall eignet sich beispielsweise Al, Cu, Ag, Au, Ti, Cr, Ni, Pd und/oder Pt, welches als Folie vorgesehen sein kann und/oder beschichtet, beispielsweise aufgedampft, sein kann. Als Metalloxide eignen sich beispielsweise Aluminiumoxid, Siliziumdioxid, Titanoxid, etc., bzw. Mischoxide. Die mindestens eine Bremsschicht gegenüber Feuchtigkeit kann auch als Polymer ausgebildet sein und beispielsweise ein Material umfassen bzw. aus einem Material bestehen, welches ausgewählt ist aus der Gruppe, bestehend aus Polypropylen (PP), Polyethylen (PE), Polyolefinen (PO), Latex, Nitrilkautschuk (NBR), Styrol-Butadien-Kautschuk (SBR), Polycarbonat (PC), Polyvinylchlorid (PVC), Polyvinylacetat (PVAC), Polyurethan (PU) und/oder Copolymeren und/oder Mischungen davon.

Das Material der Sperrschicht, welche für Weichmacher undurchlässig ist, ist hierbei nicht besonders beschränkt, so es einen Weichmacherdurchtritt verhindert, und ist beispielsweise polymer, metallisch und/oder keramisch, also umfasst ein oder mehrere Polymere, Metalle und/oder Keramiken und/oder besteht daraus. Als Sperrschicht, welche für Weichmacher undurchlässig ist, kann beispielsweise eine Schicht dienen, welche ein Metall, ein Metalloxid und/oder ein Polymer umfassend Polyethylenterephthalat (PET), aromatische und/oder aliphatische Polyamide (PA), aliphatische und/oder aromatische Polyester (PES), Polymethylmethacrylat (PMMA), Polyacrylnitril (PAN), Polyvinylchlorid (PVC), Polycarbonat (PC), Polyurethan (PUR), Polyvinylacetat (PVAC), Polyvinylalkohol (PVOH) und/oder Copolymere und/oder Mischungen davon, enthält und/oder daraus besteht.

Gemäß bestimmten Ausführungsformen ist die mindestens eine Bremsschicht für Feuchtigkeit und/oder die optionale mindestens eine Sperrschicht, welche für Weichmacher undurchlässig ist, in die Trägerfolie integriert.

Gemäß bestimmten Ausführungsformen hat die einseitig selbstklebende Klebefolie eine Breite von mindestens 300 mm, bevorzugt mindestens 350 mm, weiter bevorzugt mindestens 400 mm, beispielsweise von mindestens 500 mm. Mit der erfindungsgemäßen einseitig selbstklebenden Klebefolie ist ein manuell faltenfreies Auftragen selbst bei größerer Breite der einseitig selbstklebenden Klebefolie möglich. Insbesondere wenn eine entfernbare Abdeckschicht vorhanden ist.

Zudem offenbart ist ein Verfahren zur Herstellung einer einseitig selbstklebenden Klebefolie umfassend,
- mindestens eine Trägerfolie, wobei die Trägerfolie auf einer Seite eine klebefreundliche Oberfläche aufweist; und
- eine Haftkleberschicht, welche sich auf einer der Umgebung zugewandten Seite der Trägerfolie auf der der klebefreundlichen Oberfläche gegenüberliegenden Seite befindet;
wobei auf der klebefreundlichen Oberfläche der Trägerfolie eine entfernbare Abdeckschicht derart aufgebracht wird, dass die Haftkleberschicht auf einer der klebefreundlichen Oberfläche der Trägerfolie gegenüberliegende Oberfläche der entfernbaren Abdeckschicht eine Haftung von kleiner oder gleich 2,50 N/50 mm, bevorzugt kleiner oder gleich 1,25N/50 mm, gemessen gemäß Finat FTM 10, aufweist,
wobei die Haftkleberschicht auf eine der Umgebung zugewandten, der klebefreundlichen Oberfläche gegenüberliegenden Seite der Trägerfolie aufgebracht wird und die entfernbare Abdeckschicht auf der klebefreundlichen Oberfläche der Trägerfolie aufgebracht wird, wobei die entfernbare Abdeckschicht vor, während oder nach der ersten Haftkleberschicht aufgebracht wird; und/oder
wobei die Haftkleberschicht auf die Trägerfolie auf der der klebefreundlichen Oberfläche gegenüberliegenden Seite der Trägerfolie aufgebracht wird, wobei die Haftkleberschicht auf der klebefreundlichen Oberfläche der Trägerfolie eine Haftung von kleiner oder gleich 2,50 N/50 mm, bevorzugt kleiner oder gleich 1,25 N/50 mm, gemessen gemäß Finat FTM 10, aufweist.

Mit dem erfindungsgemäßen Verfahren kann insbesondere die erfindungsgemäße einseitig selbstklebende Klebefolie hergestellt werden. Entsprechend können die jeweiligen Schichten wie oben zur erfindungsgemäßen einseitig selbstklebenden Klebefolie angegeben ausgebildet sein. Das jeweilige Aufbringen der jeweiligen Schichten ist hierbei nicht besonders beschränkt. Die Einstellung einer klebefreundlichen Oberfläche der Trägerfolie kann wie oben beschrieben erfolgen.

Gemäß bestimmten Ausführungsformen wird auf der klebefreundlichen Oberfläche der Trägerfolie eine entfernbare Abdeckschicht aufgebracht, wobei vor dem Aufbringen der entfernbaren Abdeckschicht auf die klebefreundliche Oberfläche der Trägerfolie auf die entfernbare Abdeckschicht eine Haftschicht aufgebracht wird, wobei die entfernbare Abdeckschicht derart auf die Trägerfolie aufgebracht wird, dass die Haftschicht auf der entfernbaren Abdeckschicht mit der klebefreundlichen Oberfläche der Trägerfolie in Kontakt kommt, bevorzugt wobei die Haftschicht auf der klebefreundlichen Oberfläche der Trägerfolie eine Haftung von 0,05 bis 2,50 N/50 mm, bevorzugt 0,10 - 1,25 N/50mm, gemessen gemäß Finat FTM 10, aufweist.

Das Aufbringen der Haftschicht auf die entfernbare Abdeckschicht ist hierbei nicht besonders beschränkt. Die Haftschicht kann hierbei derart beschaffen sein, wie es im Zusammenhang mit der erfindungsgemäßen einseitig selbstklebenden Klebefolie diskutiert ist.

Auch kann gemäß bestimmten Ausführungsformen auf die entfernbare Abdeckschicht eine haftungsmindernde Schicht aufgebracht werden, bevor die entfernbare Abdeckschicht auf die klebefreundliche Oberfläche aufgebracht wird, wobei die entfernbare Abdeckschicht derart auf die klebefreundlichen Oberfläche der Trägerfolie aufgebracht wird, dass die haftungsmindernde Schicht auf einer der klebefreundlichen Oberfläche gegenüberliegenden, der Umgebung zugewandten Seite der entfernbaren Abdeckschicht vorhanden ist. Auch das Aufbringen der haftungsmindernden Schicht ist nicht besonders beschränkt.

Wenn sowohl die Haftschicht als auch die haftungsmindernde Schicht auf die entfernbare Abdeckschicht aufgebracht werden, werden diese auf entgegengesetzten Seiten der entfernbaren Abdeckschicht aufgebracht, wobei sie nacheinander oder gleichzeitig aufgebracht werden können. Bevorzugt wird hierbei die haftungsmindernde Schicht zuerst aufgebracht.

Gemäß bestimmten Ausführungsformen kann die entfernbare Abdeckschicht beim Auftrennen, z.B. der Klebefolienrollen oder -stapel, z.B. Entstapeln oder Abrollen, auf der klebefreundlichen Oberfläche der Trägerfolie verbleiben.

Gemäß bestimmten Ausführungsformen wird die klebefreundliche Oberfläche der Trägerfolie durch physikalische und/oder chemische Vorbehandlung, Beschichten, Prägung der Trägerfolie und/oder Verbinden einer textilen Struktur mit der Trägerfolie hergestellt. Die Oberfläche der Trägerfolie kann beispielsweise für das Herstellen der klebefreundlichen Oberfläche klebefreundlich behandelt werden, z.B. mit einer Koronabehandlung und/oder einer Plasmabehandlung und/oder einer Primerbeschichtung bzw. Haftvermittlerschicht, und/oder durch Aufbringen eines geeigneten klebefreundlichen Materials, z.B. eines geeigneten Gewebes oder Vlieses, welche nicht besonders beschränkt sind und auf das Material der Trägerfolie bzw. der Bauklebstoffe abgestimmt sein können. Gemäß bestimmten Ausführungsformen weist die Haftkleberschicht eine Haftung auf der klebefreundlichen Oberfläche der Trägerfolie von kleiner oder gleich 2,50 N/50 mm, bevorzugt kleiner oder gleich 1,25 N/50 mm, gemessen gemäß Finat FTM 10, auf.

Zudem betrifft die vorliegende Erfindung ein Verfahren zum, insbesondere vollflächigen, Auftragen der erfindungsgemäßen einseitig selbstklebenden Klebefolie auf einem Untergrund, z.B. einem Boden, einer Treppe oder einer Wand, umfassend:
Aufbringen der einseitig selbstklebenden Klebefolie auf den Untergrund,
Anreiben und/oder Anrollen der einseitig selbstklebenden Klebefolie auf dem Untergrund, ggf. Entfernen der entfernbaren Abdeckschicht der einseitig selbstklebenden Klebefolie und ggf. Aufbringen von einem Klebstoff, einem Abrieb und/oder einer Spachtelmasse, z.B. einer selbstverlaufenden Spachtelmasse oder Wandspachtelmasse, auf der klebefreundlichen Oberfläche der einseitig selbstklebenden Selbstklebefolie. Auf den Abrieb und/oder die Spachtelmasse kann dann im Anschluss ein weiterer Belag wie ein Boden, ein Wandbelag, etc., aufgebracht werden. Der Abrieb oder die Spachtelmasse sind nicht besonders beschränkt. Ebenso sind das Aufbringen, das Anreiben und/oder Anrollen auf dem Untergrund, das optionale Entfernen der entfernbaren Abdeckschicht und das optionale Aufbringen von einem Klebstoff, einem Abrieb und/oder einer Spachtelmasse, z.B. einer selbstverlaufenden Spachtelmasse, auf der klebefreundlichen Oberfläche der einseitig selbstklebenden Selbstklebefolie nicht besonders beschränkt. Die Schritte können fachgemäß ausgeführt werden.

Der Untergrund, also z.B. ein Boden, eine Treppe oder eine Wand, ist hierbei ebenfalls nicht besonders beschränkt hinsichtlich dem Material und/oder der Beschaffenheit.

Gemäß bestimmten Ausführungsformen wird die einseitig selbstklebende Klebefolie mit einer Breite von mindestens 300 mm, bevorzugt mindestens 350 mm, weiter bevorzugt mindestens 400 mm, beispielsweise von mindestens 500 mm aufgebracht. Mit der erfindungsgemäßen einseitig selbstklebenden Klebefolie ist ein manuell faltenfreies Auftragen selbst bei größerer Breite der einseitig selbstklebenden Klebefolie möglich. Insbesondere wenn eine entfernbare Abdeckschicht vorhanden ist. Nach oben hin ist die Breite der einseitig selbstklebenden Klebefolie nicht besonders beschränkt. Beispielsweise können einseitig selbstklebende Folien mit einer Breite von bis zu 1,20 m bereitgestellt werden, welche geeignet auf einem Untergrund aufgebracht werden können.

Gemäß bestimmten Ausführungsformen wird eine Spachtelmasse und/oder ein Klebstoff auf der klebefreundlichen Oberfläche bzw. Trägeroberfläche der einseitig selbstklebenden Selbstklebefolie aufgebracht, wobei im Anschluss auf die Spachtelmasse und/oder den Klebstoff ein Bodenbelag geklebt wird. Der Bodenbelag ist hierbei nicht besonders beschränkt und umfasst beispielsweise einen PVC-, CV-, Teppich-, Linoleum-, Parkett-, Gummi-, Korkbelag, etc.

Weiterhin offenbart ist die Verwendung der erfindungsgemäßen einseitig selbstklebenden Klebefolie zum, insbesondere vollflächigen, Auftragen eines, bevorzugt vom Haftkleber der Haftkleberschicht verschiedenen, Klebstoffes und/oder einer Spachtelmasse auf einen Untergrund. Entsprechend dient die erfindungsgemäße einseitig selbstklebende Klebefolie als Vermittler zum Auftrag auf dem Untergrund, auf dem beispielsweise der entsprechende Kleber und/oder die Spachtelmasse nicht ausreichend haften oder aus anderen Gründen nicht aufgetragen werden soll. Durch weitere Schichten wie eine Bremsschicht für Feuchtigkeit und/oder eine Sperrschicht für Weichmacher kann hierbei noch eine Funktionalisierung erfolgen, um beispielsweise einen entsprechenden Schutz des Klebers und/oder der Spachtelmasse, eines Bodenbelags, etc. zu erzielen.

Die obigen Ausführungsformen, Ausgestaltungen und Weiterbildungen lassen sich, sofern sinnvoll, beliebig miteinander kombinieren. Weitere mögliche Ausgestaltungen,
Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss anhand einiger beispielhafter Ausführungsformen dargestellt, die diese jedoch nicht einschränken.

### Beispiel 1

Ein beispielhafter Aufbau einer erfindungsgemäßen einseitig selbstklebenden Klebefolie ist wie folgt (z.B. von oben gesehen beim Aufbringen auf einen Untergrund)
- Haftungsmindernde Schicht einer entfernbaren Abdeckschicht: Silikon
- Träger der ablösbaren Abdeckschicht: z.B. Papier, Folie
- Haftschicht der ablösbaren Abdeckschicht, wie beispielhaft nachfolgend angegeben
- Klebefreundliche Oberfläche einer Trägerfolie, z.B. hergestellt durch Koronabehandlung der Trägerfolie
- Trägerfolie: beispielsweise Polymerfolie, z.B. PP-Folie oder PET-Folie, oder mehrschichtige Folie
- Haftklebstoffschicht mit Klebekraft > 15 N/25mm nach DIN EN 1939:2003
- Haftung der Haftkleberschicht auf der haftungsmindernden Schicht der entfernbaren Abdeckschicht < 1N/50 mm, hier insbesondere 0,3 N/50 mm gemäß Finat FTM 10

Das Material wird erfindungsgemäß in Bahnen hergestellt und auf Rollen gewickelt.

Beispiele für geeignete Formulierungen für die Haftschicht und die Haftung der Haftschicht auf der klebefreundlichen Oberfläche der Trägerfolie in Beispiel 1 finden sich in der folgenden Tabelle 1. Als Materialien für die Haftschicht wurden die folgenden Materialien verwendet:
Pr31L-105: Alberdingk AC 75063 50 Gew.% und Alberdingk U3251 50 Gew.%;
Pr31L-106: Primal / Axilat 4801 50 Gew.% und Alberdingk U3251 50 Gew.%;
Pr31L-114: BASF Acronal V212 30 Gew.% und Alberdingk U3251 70 Gew.%

Die Auftragung der Haftschicht erfolgte mit einer Schichtdicke von ca. 20 g/m².

**Tabelle 1: Beispielhafte Haftschichtmaterialien und Haftung auf der klebefreundlichen Oberfläche der Trägerfolie in Beispiel 1**

| Formulierung | Pr31L-106 | Pr31L-114 | Pr31L-105 |
|---|---|---|---|
| Haftung nach Finat FTM 10 [N/50mm] | 0,23 | 0,20 | 1,00 |

### Beispiel 2

Ein weiterer beispielhafter Aufbau einer erfindungsgemäßen einseitig selbstklebenden Klebefolie mit einer textilen Oberfläche auf der Trägerfolie ist wie folgt (z.B. von oben gesehen beim Aufbringen auf einen Untergrund)
- Haftungsmindernde Schicht einer entfernbaren Abdeckschicht: Silikon
- Träger der ablösbaren Abdeckschicht: z.B. Papier, Folie
- Haftschicht der ablösbaren Abdeckschicht, wie beispielhaft nachfolgend angegeben
- Klebefreundliche Oberfläche: Vlies z.B. PES Spinnvlies 80 g/m²
- Laminierklebstoff
- Trägerfolie: beispielsweise Polymerfolie, z.B. PP-Folie oder PET-Folie, oder mehrschichtige Folie
- Haftklebstoffschicht mit Klebekraft > 15 N/25mm nach DIN EN 1939:2003
- Haftung der Haftkleberschicht auf der haftungsmindernden Schicht der entfernbaren Abdeckschicht < 1N/50 mm, hier insbesondere 0,3 N/50 mm, gemäß Finat FTM 10

Das Material wird erfindungsgemäß in Bahnen hergestellt und auf Rollen gewickelt.

Beispiele für geeignete Formulierungen für die Haftschicht und die Haftung der Haftschicht auf der klebefreundlichen Oberfläche der Trägerfolie mit textiler Struktur in Beispiel 2 finden sich in der folgenden Tabelle 2. Als Materialien für die Haftschicht wurden die folgenden Materialien verwendet:
Pr31L-121: Alberdingk AC 75013 50 Gew.% und BASF Acronal V212 Gew.50%;
Pr31L-157: BASF Luphen D 259 U 100 Gew.%;
Pr31L-154: BASF Acronal A 245 100 Gew.%

Die Auftragung der Haftschicht erfolgte mit einer Schichtdicke von ca. 25 g/m².

**Tabelle 2: Beispielhafte Haftschichtmaterialien und Haftung auf der klebefreundlichen Oberfläche der Trägerfolie in Beispiel 2**

| Formulierung | Pr31L-121 | Pr31L-157 | Pr31L-154 |
|---|---|---|---|
| Haftung nach Finat FTM 10 [N/50mm] | 0,50 | 0,25 | 1,08 |

### Beispiel 3

Ein weiterer beispielhafter Aufbau einer erfindungsgemäßen einseitig selbstklebenden Klebefolie mit einer textilen Oberfläche bzw. strukturierten Oberfläche auf der Trägerfolie ist wie folgt (z.B. von oben gesehen beim Aufbringen auf einen Untergrund)
- Klebefreundliche Oberfläche wie beispielhaft nachfolgend angegeben
- Laminierklebstoff
- Trägerfolie: beispielsweise Polymerfolie, z.B. PP-Folie oder PET-Folie, oder mehrschichtige Folie
- Haftklebstoffschicht mit Klebekraft < 10 N/25mm, hier insbesondere 6.0 N/25mm nach DIN EN 1939:2003

Das Material wird erfindungsgemäß in Bahnen hergestellt und auf Rollen gewickelt.

Beispiele für geeignete Klebefreundliche Oberflächen, auf welchen gleichzeitig eine Haftkleberschicht mit Klebekraft < 10N/25mm nach DIN EN 1939:2003 eine genügend geringe Haftung aufweist, sowie die Haftungswerte auf der Trägerfolie mit textiler Struktur oder Strukturierung der klebefreundlichen Oberfläche gemäß Beispiel 3 finden sich in der folgenden Tabelle 3. Als Materialien für die klebefreundliche Oberfläche wurden die folgenden Materialien verwendet:
Pr31S-12: Zellwollgewebe 120 g/m²
Pr31S-17: Huhtamaki LDPE 60219 D119
Pr31S-24: Huhtamaki LDPE 16000 D124

**Tabelle 3: Beispielhafte Haftung auf der klebefreundlichen Oberfläche der Trägerfolie in Beispiel 3**

| Schichtbeispiele | Pr31S-12 | Pr31S-17 | Pr31S-24 |
|---|---|---|---|
| Haftung nach Finat FMT 10 [N/50mm] | 1,64 | 0,55 | 0,10 |

### Beispiel 4

Im Folgenden sind Beispiele für die Haftung von diversen Klebstoffen auf einer klebefreundlichen Oberfläche einer erfindungsgemäßen einseitig selbstklebenden Klebefolie gezeigt.

Die klebefreundliche Oberfläche wird dabei durch eine Koronabehandlung einer PP Folie als Trägerfolie erzielt. In der folgenden Tabelle 4 sind die auf der klebefreundlichen Oberfläche erzielbaren Haftwerte mit verschiedenen Klebstoffen bzw. Spachtelmassen angegeben.

**Tabelle 4: Haftung verschiedener Klebstoffe auf einer klebefreundlichen Oberfläche einer erfindungsgemäßen einseitig selbstklebenden Klebefolie**

| Klebstofftyp | Klebstoff | Prüfnorm | Normvorgabe | Prüfwert |
|---|---|---|---|---|
| Bodenbelagsklebstoff Dispersion | Uzin KE 2000 | DIN EN 1372:2015 | 0,5 N/mm | 0,77 N/mm |
| Teppichkleber | Uzin UZ 57 | DIN EN 1372:2015 | 0,5 N/mm | 0,56 N/mm² |
| Parkettklebstoff | Uzin MK 92 | DIN EN 14293:2006 | 1,0 N/mm² | 1,25 N/mm² |
| Fliesenkleber | Uzin | SN EN 1348:2007 | 0,5 N/mm² | 0,86 N/mm² |
| Spachtel masse | Uzin NC 172 | DIN EN 13892-8:2008 | 1,0 N/mm² | 1,8 N/mm² |

## Patentansprüche

1. Einseitig selbstklebende Klebefolie, umfassend,
- mindestens eine Trägerfolie, wobei die Trägerfolie auf einer Seite eine klebefreundliche Oberfläche aufweist; und
- eine Haftkleberschicht, welche sich auf einer der Umgebung zugewandten Seite der Trägerfolie auf der der klebefreundlichen Oberfläche gegenüberliegenden Seite befindet;
wobei auf der klebefreundlichen Oberfläche der Trägerfolie eine entfernbare Abdeckschicht derart aufgebracht ist, dass die Haftkleberschicht eine Haftung auf einer der klebefreundlichen Oberfläche der Trägerfolie gegenüberliegende Oberfläche der entfernbaren Abdeckschicht von kleiner oder gleich 2,50 N/50 mm, bevorzugt kleiner oder gleich 1,25 N/50 mm, gemessen gemäß Finat FTM 10, aufweist, und/oder
wobei die Haftkleberschicht eine Haftung auf der klebefreundlichen Oberfläche von kleiner oder gleich 2,50 N/50 mm, bevorzugt kleiner oder gleich 1,25 N/50 mm, gemessen gemäß Finat FTM 10, aufweist.

2. Einseitig selbstklebende Klebefolie nach Anspruch 1,
wobei die entfernbare Abdeckschicht auf der klebefreundlichen Oberfläche der Trägerfolie vorhanden ist, wobei die entfernbare Abdeckschicht auf einer der klebefreundlichen Oberfläche der Trägerfolie zugewandten Seite eine Haftschicht aufweist, welche auf der klebefreundlichen Oberfläche der Trägerfolie eine Haftung von 0,05 bis 2,50 N/50 mm, bevorzugt 0,10 - 1,25 N/50mm, gemessen gemäß Finat FTM 10, aufweist.

3. Einseitig selbstklebende Klebefolie nach Anspruch 1 oder 2, wobei die entfernbare Abdeckschicht auf der klebefreundlichen Oberfläche der Trägerfolie vorhanden ist, wobei die entfernbare Abdeckschicht auf einer der klebefreundlichen Oberfläche gegenüberliegenden, der Umgebung zugewandten Seite eine haftungsmindernde Schicht aufweist.

4. Einseitig selbstklebende Klebefolie nach einem der Ansprüche 1 bis 3,
wobei die entfernbare Abdeckschicht auf der klebefreundlichen Oberfläche der Trägerfolie vorhanden ist, wobei die entfernbare Abdeckschicht auf einer der klebefreundlichen Oberfläche der Trägerfolie zugewandten Seite eine Haftschicht aufweist, wobei die Haftung der Haftschicht der entfernbaren Abdeckschicht auf der klebefreundlichen Oberfläche der Trägerfolie mindestens doppelt so hoch ist wie die Haftung der Haftkleberschicht der selbstklebenden Klebefolie auf der haftungsmindernden Schicht der Abdeckschicht.

5. Einseitig selbstklebende Klebefolie nach einem der Ansprüche 2 bis 4,
wobei die Haftung der Haftschicht der entfernbaren Abdeckschicht auf der klebefreundlichen Oberfläche der Trägerfolie, gemessen nach Finat FTM 10, maximal 50% der Haftung der Haftkleberschicht der selbstklebenden Klebefolie auf einem zu beklebenden Untergrund, gemessen angelehnt an die DIN EN 1939:2003, beträgt.

6. Einseitig selbstklebende Klebefolie nach einem der vorigen Ansprüche,
wobei die klebefreundliche Oberfläche der Trägerfolie eine textile Struktur aufweist und/oder strukturiert ist.

7. Einseitig selbstklebende Klebefolie nach Anspruch 6,
wobei die oberste, der Umgebung zugewandte Oberfläche der textilen Struktur und/oder der Strukturierung der klebefreundlichen Oberfläche der Trägerfolie kleiner oder gleich 20 % der normalen Oberfläche der textilen Struktur und/oder der Strukturierung ausmacht.

8. Einseitig selbstklebende Klebefolie nach Anspruch 7,
wobei die textile Struktur und/oder die Strukturierung der klebefreundlichen Oberfläche der Trägerfolie auf einer der Umgebung zugewandten Seite eine haftungsmindernde Oberfläche aufweist, wobei diese bevorzugt nur die oberste, der Umgebung zugewandte Oberfläche der textilen Struktur und/oder der Strukturierung der Trägerfolie und somit maximal 20 % der gesamten Oberfläche der der Trägerfolie abgewandten Seite ausmacht.

9. Einseitig selbstklebende Klebefolie nach einem der vorigen Ansprüche, weiter umfassend eine Bremsschicht für Feuchtigkeit und/oder eine Sperrschicht für Weichmacher.

10. Verfahren zur Herstellung einer einseitig selbstklebenden Klebefolie umfassend,
- mindestens eine Trägerfolie, wobei die Trägerfolie auf einer Seite eine klebefreundliche Oberfläche aufweist; und
- eine Haftkleberschicht, welche sich auf einer der Umgebung zugewandten Seite der Trägerfolie auf der der klebefreundlichen Oberfläche gegenüberliegenden Seite befindet;
wobei auf der klebefreundlichen Oberfläche der Trägerfolie eine entfernbare Abdeckschicht derart aufgebracht wird, dass die Haftkleberschicht auf einer der klebefreundlichen Oberfläche der Trägerfolie gegenüberliegende Oberfläche der entfernbaren Abdeckschicht eine Haftung von kleiner oder gleich 2,50 N/50 mm, bevorzugt kleiner oder gleich 1,25N/50 mm, gemessen gemäß Finat FTM 10, aufweist,
wobei die Haftkleberschicht auf eine der Umgebung zugewandten, der klebefreundlichen Oberfläche gegenüberliegenden Seite der Trägerfolie aufgebracht wird und die entfernbare Abdeckschicht auf der klebefreundlichen Oberfläche der Trägerfolie aufgebracht wird, wobei die entfernbare Abdeckschicht vor, während oder nach der ersten Haftkleberschicht aufgebracht wird; und/oder
wobei die Haftkleberschicht auf die Trägerfolie auf der der klebefreundlichen Oberfläche gegenüberliegenden Seite der Trägerfolie aufgebracht wird, wobei die Haftkleberschicht auf der klebefreundlichen Oberfläche der Trägerfolie eine Haftung von kleiner oder gleich 2,50 N/50 mm, bevorzugt kleiner oder gleich 1,25 N/50 mm, gemessen gemäß Finat FTM 10, aufweist.

11. Verfahren nach Anspruch 10, wobei auf der klebefreundlichen Oberfläche der Trägerfolie eine entfernbare Abdeckschicht aufgebracht wird, wobei vor dem Aufbringen der entfernbaren Abdeckschicht auf die klebefreundliche Oberfläche der Trägerfolie auf die entfernbare Abdeckschicht eine Haftschicht aufgebracht wird, wobei die entfernbare Abdeckschicht derart auf die Trägerfolie aufgebracht wird, dass die Haftschicht auf der entfernbaren Abdeckschicht mit der klebefreundlichen Oberfläche der Trägerfolie in Kontakt kommt, bevorzugt wobei die Haftschicht auf der klebefreundlichen Oberfläche der Trägerfolie eine Haftung von 0,05 bis 2,50 N/50 mm, bevorzugt 0,10 - 1,25 N/50mm, gemessen gemäß Finat FTM 10, aufweist

12. Verfahren nach Anspruch 10 oder 11, wobei die klebefreundliche Oberfläche der Trägerfolie durch physikalische und/oder chemische Vorbehandlung, Beschichten, Prägung der Trägerfolie und/oder Verbinden einer textilen Struktur mit der Trägerfolie hergestellt wird.

13. Verfahren zum Auftragen einer einseitig selbstklebenden Klebefolie nach einem der Ansprüche 1 bis 11 auf einem Untergrund, z.B. einem Boden, einer Treppe oder einer Wand, umfassend:
Aufbringen der einseitig selbstklebenden Klebefolie auf den Untergrund,
Anreiben und/oder Anrollen der einseitig selbstklebenden Klebefolie auf dem Untergrund,
ggf. Entfernen der entfernbaren Abdeckschicht der einseitig selbstklebenden Klebefolie und
ggf. Aufbringen von einem Klebstoff, einem Abrieb und/oder einer Spachtelmasse auf der klebefreundlichen Oberfläche der einseitig selbstklebenden Selbstklebefolie.

14. Verfahren nach Anspruch 13, wobei eine Spachtelmasse und/oder ein Klebstoff auf der klebefreundlichen Oberfläche der einseitig selbstklebenden Selbstklebefolie aufgebracht wird, wobei im Anschluss auf die Spachtelmasse und/oder den Klebstoff ein Bodenbelag geklebt wird.

15. Verwendung einer einseitig selbstklebenden Klebefolie nach einem der Ansprüche 1 bis 11 zum Auftragen eines, bevorzugt vom Haftkleber der Haftkleberschicht verschiedenen, Klebstoffes und/oder einer Spachtelmasse auf einen Untergrund.
